(19) **Europäisches Patentamt / European Patent Office / Office européen des brevets**

(11) **EP 2 850 768 B1**

(12) **EUROPEAN PATENT SPECIFICATION**

(45) Date of publication and mention
of the grant of the patent:
**30.09.2020 Bulletin 2020/40**

(51) Int Cl.:
*H04L 5/00* (2006.01)　　　*H04L 25/02* (2006.01)
*H04L 25/03* (2006.01)

(21) Application number: **13726135.0**

(22) Date of filing: **21.05.2013**

(86) International application number:
**PCT/EP2013/060356**

(87) International publication number:
**WO 2013/171341 (21.11.2013 Gazette 2013/47)**

(54) **A METHOD AND APPARATUS FOR SENDING INFORMATION IN A COMMMUNICATION SYSTEM**

VERFAHREN UND GERÄT ZUM SENDEN VON INFORMATIONEN IN EINEM KOMMUNIKATIONSSYSTEM

PROCÉDÉ ET APPAREIL POUR LA TRANSMISSION DE DONNÉES DANS UN SYSTÈME DE COMMUNICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2012 PCT/EP2012/059257**

(43) Date of publication of application:
**25.03.2015 Bulletin 2015/13**

(73) Proprietor: **Nokia Solutions and Networks Oy 02610 Espoo (FI)**

(72) Inventors:
• **RANTA-AHO, Karri Markus**
**FI-02600 Espoo (FI)**
• **TOSKALA, Antti Anton**
**FI-02180 Espoo (FI)**

(74) Representative: **Nokia EPO representatives Nokia Technologies Oy Karakaari 7 02610 Espoo (FI)**

(56) References cited:
**WO-A1-2012/024338　　WO-A2-2011/154030**

**Description**

Embodiments relate to a method and apparatus, and in particular but not exclusively to a method and apparatus for multicarrier uplink transmission.

A communication system can be seen as a facility that enables communication sessions between two or more entities such as fixed or mobile communication devices, base stations, servers and/or other communication nodes. A communication system and compatible communicating entities typically operate in accordance with a given standard or specification. A communication can be carried on wired or wireless carriers. In a wireless communication system at least a part of the communication between at least two stations occurs over a wireless link.

Examples of wireless systems include public land mobile networks (PLMN) such as cellular networks, satellite based communication systems and different wireless local networks, for example wireless local area networks (WLAN).

A user can access the communication system by means of an appropriate communication device. A communication device of a user is often referred to as user equipment (UE) or terminal. Typically a communication device is used for enabling receiving and transmission of communications such as speech and data. In wireless systems a communication device provides a transceiver station that can communicate with another communication device such as e.g. a base station of an access network and/or another user equipment. The communication device may access a carrier provided by a station, for example a base station, and transmit and/or receive communications on the carrier.

An example of communication systems attempting to satisfy the increased demands for capacity is an architecture that is being standardized by the 3rd Generation Partnership Project (3GPP). The communication system is often referred to as Universal Mobile Telecommunications System (UMTS) radio-access technology with the enhancements for High Speed Packet Access (HSPA) which improves the downlink and uplink transmission (HSDPA, HSUPA), and the long-term evolution (LTE) of the Universal Mobile Telecommunications System (UMTS) radio-access technology. The HSPA and LTE enhancements aim to achieve various improvements, for example reduced latency, higher user data rates, improved system capacity and coverage, reduced cost for the operator and so on. A further development of the LTE is often referred to as LTE-Advanced. The various development stages of the 3GPP LTE and HSPA specifications are referred to as releases.

WO 2012/024338 A1 discloses a method in a wireless communication terminal that supports aggregated carrier access including transmitting a power headroom report of a first type, determining that a condition for transmitting a power headroom report of a second type is satisfied and transmitting a power headroom report of the second type.

The invention is defined in the independent claims. Advantageous embodiments are set out in the dependent claims.

For a better understanding, and to show how embodiments may be carried into effect, reference will now be made by way of example only, to the accompanying figures in which:

Figure 1 shows a schematic diagram of a network according to some embodiments;

Figure 2 shows a schematic diagram of a mobile communication device according to some embodiments;

Figure 3a shows a schematic diagram of a controller according to some embodiments;

Figure 3b shows a schematic diagram of a base station according to some embodiments;

Figure 4 schematically shows a dual carrier mechanism for HSUPA according to an embodiment;

Figure 5 shows transmission time interval allocation on an extension carrier according to an embodiment; Figure 6 schematically shows power levels on a primary carrier and an extension carrier according to an embodiment;

Figure 7 shows a communication flow between a UE and a network node/radio resource controller according to an embodiment.

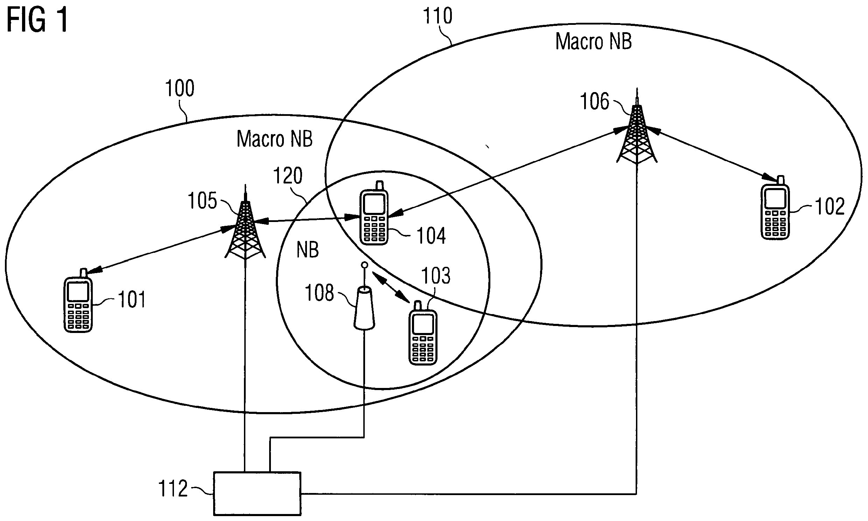

In the following certain exemplifying embodiments are explained with reference to a wireless or mobile communication system serving mobile communication devices. Before explaining in detail the exemplifying embodiments, certain general principles of a wireless communication system, access systems thereof, and mobile communication devices are briefly explained with reference to Figures 1 to 3 to assist in understanding the technology underlying the described examples.

A mobile communication device or user equipment 101, 102, 103, 104 is typically provided wireless access via at least one base station or similar wireless transmitter and/or receiver node of an access system. In figure 1 three neighbouring and overlapping access systems or radio service areas 100, 110 and 120 are shown being provided by base stations 105, 106, and 108.

However, it is noted that instead of three access systems, any number of access systems can be provided in a communication system. An access system can be provided by a cell of a cellular system or another system enabling a communication device to access a communication system. A base station site 105, 106, 108 can provide one or more cells. A base station can also provide a plurality of sectors, for example three radio sectors, each sector providing a cell or a subarea of a cell. All sectors within a cell can be served by the same base station. A radio link within a sector can be identified by a single logical identification belonging to that sector. Thus a base station can provide one or more radio service areas. Each mobile communication device 101, 102, 103, 104, and base station 105, 106, and 108 may have one or more radio channels open at the same time and may send signals to and/or receive signals from more than one source.

Base stations 105, 106, 108 may be controlled by a radio network controller RNC 112 so as to enable operation thereof and management of mobile communication devices 101, 102, 103, 104 in communication with the base stations 105, 106, 108. The function of the RNC may be distributed between a plurality of entities. Although not shown in Figure 1 in some embodiments, each base station 105, 106 and 108 can have at least part of the RNC function. In some standards and deployments, the RNC may be omitted.

The cell borders or edges are schematically shown for illustration purposes only in Figure 1. It shall be understood that the sizes and shapes of the cells or other radio service areas may vary considerably from the similarly sized omni-directional shapes of Figure 1.

In particular, Figure 1 depicts two wide area base stations 105, 106, which can be macro-NBs (node B) 105, 106. The macro-NBs 105, 106 transmit and receive data over the entire coverage of the cells 100 and 110 respectively. Figure 1 also shows a smaller base station or access point which in some embodiments can be a pico NB 108. The coverage of the smaller base station 108 may generally be smaller than the coverage of the wide area base stations 105, 106. The coverage provided by the smaller node 108 overlap with the coverage provided by the macro-NBs 105, 106. In some embodiments, the smaller node can be a femto or Home NB. Pico NBs can be used to extend coverage of the macro-NBs 105, 106 outside the original cell coverage 100, 110 of the macro-NBs 105, 106. The pico NB can also be used to provide cell coverage in "gaps" or "shadows" where there is no coverage within the existing cells 100, 110 and/or may serve "hot spots".

It should be noted that in some embodiments the pico NB or smaller NBs may not be present. In alternative embodiments, only pico or smaller NBs may be present. In some embodiments there may be no macro NBs.

The communication devices 101, 102, 103, 104 can access the communication system based on various access techniques, such as code division multiple access (CDMA), or wideband CDMA (WCDMA). Other examples include time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

Some non-limiting examples of the recent developments in communication systems are the High Speed Packet Access (HSPA) for uplink (HSUPA) and downlink (HSDPA) transmission or long-term evolution (LTE) of the Universal Mobile Telecommunications System (UMTS) that is being standardized by the 3rd Generation Partnership Project (3GPP). As explained above, further development of the LTE is referred to as LTE-Advanced.

Non-limiting examples of appropriate access nodes are a base station of a cellular system, for example what is known as NodeB (NB) in the vocabulary of the 3GPP specifications. The LTE employs a mobile architecture known as the Evolved Universal Terrestrial Radio Access Network (E-UTRAN). Base stations of such systems are known as evolved Node Bs (eNBs) and may provide E-UTRAN features such as user plane Radio Link Control/Medium Access Control/Physical layer protocol (RLC/MAC/PHY) and control plane Radio Resource Control (RRC) protocol terminations towards the user devices. Other examples of radio access system include those provided by base stations of systems that are based on technologies such as wireless local area network (WLAN) and/or WiMax (Worldwide Interoperability for Microwave Access).

Although not shown in Figure 1, a base station may provide a plurality of cells.

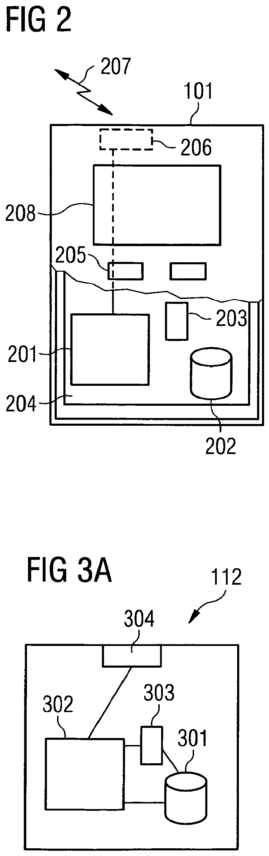

The communication devices will now be described in more detail in reference to Figure 2. Figure 2 shows a schematic, partially sectioned view of a communication device 101 that a user can use for communication. The communication device may be a mobile communication device. A communication device is often referred to as user equipment (UE) or terminal. An appropriate communication device may be provided by any device capable of sending and receiving radio signals. Non-limiting examples include a mobile station (MS) such as a mobile phone or what is known as a "smart phone", a computer provided with a wireless interface card or other wireless interface facility, personal data assistant (PDA) provided with wireless communication capabilities, or any combinations of these or the like. A communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. A user may also be provided broadcast or multicast data. Non-limiting examples of the content include downloads, television and radio programs, videos, advertisements, various alerts and other information.

The user equipment 101 may receive signals over an air interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

The user equipment is also typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204.

The user may control the operation of the user equipment by means of a suitable user interface such as a key pad 205, voice commands, touch sensitive screen or pad, combinations thereof or the like. A display 208, a speaker and a microphone can be also provided. Furthermore, a user equipment may comprise appropriate connectors (either wired or wireless) to other devices and/or for connecting external accessories, for example hands-free equipment, thereto.

Figure 3a shows an example of the controller 112. In some embodiments the controller 112 may be a Radio Network Controller (RNC). In other embodiments the controller may be part of a base station or in a different entity. The controller 112 comprises at least one memory 301, at least one data processing unit 302, 303 and an input/output interface 304. Via the interface the controller can be coupled to a plurality of base stations. The controller 109 can be configured to execute an appropriate software code to provide control functions.

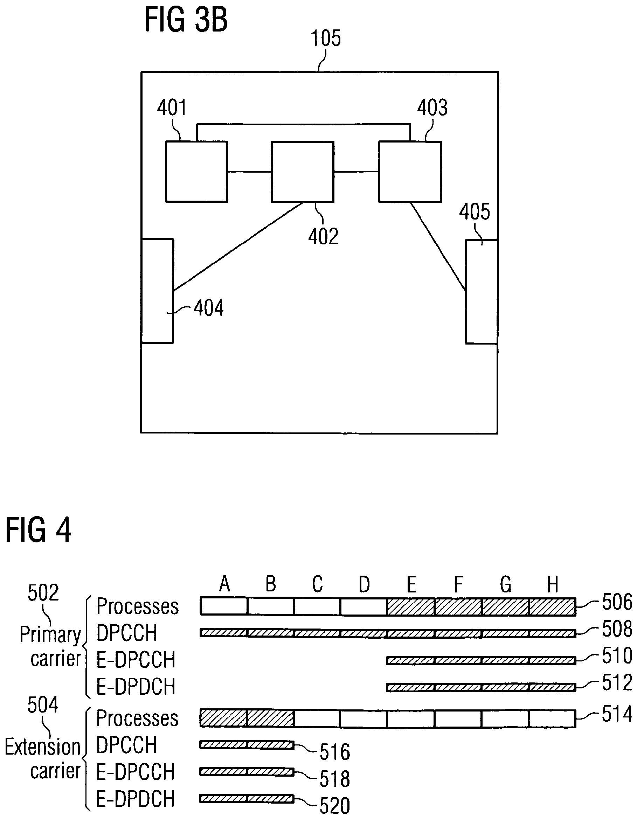

Reference is made to Figure 3b which shows a base station 105. The base station comprises at least one memory 401 and at least one data processing unit 402 and 403. The base station is provided with a first interface 404 for interfacing with the controller. The base station is provided with a second interface 405 which is a wireless interface for interfacing with user equipment.

As discussed above, one recent development in mobile telecommunications is High Speed Packet Access (HSPA), which may incorporate both high-speed uplink packet access (HSUPA) and high-speed downlink packet access (HSDPA). In a regular (single carrier) HSUPA link the UE transmits at most five channels in the uplink on the carrier. In case of dual-carrier HSUPA, three of them are present also on the secondary carrier, as shown in Table 1 below.

Table 1

| Channel name | Purpose | When transmitted | Operation with DC-HSUPA |
|---|---|---|---|
| DPCCH (Dedicated Physical Control Channel) | Synchronization maintenance and channel estimation, SIR estimation for UL power control, DL power control command delivery, TFCI for DPDCH data. | Transmitted continuously | Transmitted continuously on both carriers |
| DPDCH (Dedicated Physical Data Channel) | Uplink data channel, mainly used for CS connections (voice) | When a radio bearer is mapped on DCH in the uplink and there is data to transmit. | Can only exist on the primary carrier |
| E-DPCCH (Enhanced Dedicated Physical Control Channel) | Out-of-band information of the E-DPDCH content (transport format indication, retransmission sequence number, data rate request) | Sent simultaneously with E-DPDCH | Sent simultaneously with E-DPDCH on the same carrier |
| E-DPDCH (Enhanced Dedicated Physical Control Channel) | Uplink data channel, mainly used for PS data connections. | When a radio bearer is mapped on E-DCH in the uplink and there is data to transmit. | Can exist in both carriers at the same time. |
| HS-DPCCH High Speed Dedicated Physical Control Channel) | Uplink feedback (HARQ-ACK, CQI) for downlink data transmission over HSDPA | Periodic CQIs, DL data activity dependent HARQ-ACKs | Can only exist on the primary carrier |

In one version of DC-HSUPA (Dual Carrier HSUPA) operation, the uplink power control is separately and independently managed for each carrier by sending corresponding uplink transmit power control commands in the downlink on the corresponding DL carrier.

3GPP HSPA Release 9 defined a dual-carrier HSUPA operation, but due to battery consumption and control channel overhead reasons the feature did not receive significant operator interest.

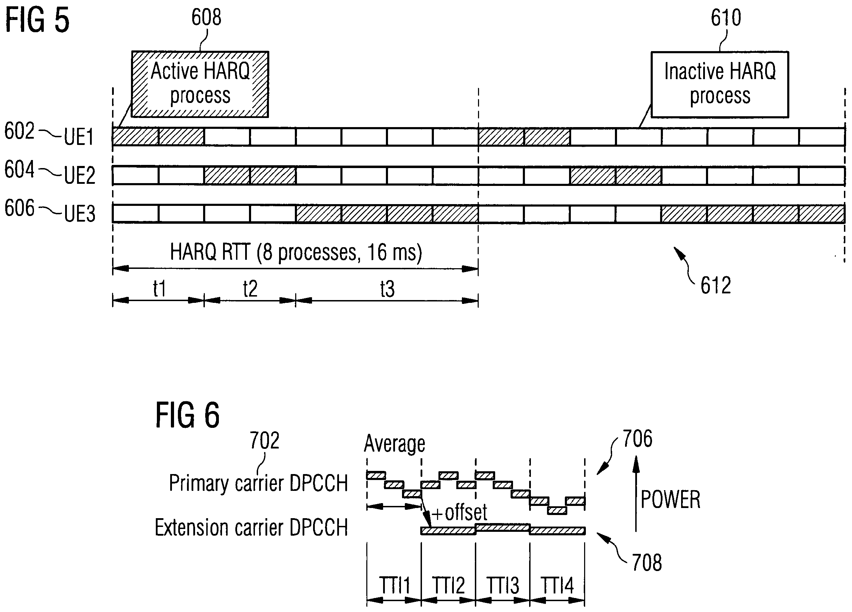

The description relating to Figures 4 and 5 does not form part of the invention but represents background art which is useful for understanding the invention.

Figure 4 shows a dual carrier mechanism for HSUPA. The dual-carrier comprises a primary carrier 502 and an extension carrier 504. The primary carrier 502 carries the following physical channels: DPCCH 508, E-DPCCH 510 and E-DPDCH 512. Multiple HARQ processes 506 are available for data transmission on E-DPDCH. A process may be active, i.e. data transmission on E-DPDCH may take place in that process, or inactive, i.e. data transmission on E-DPDCH may not take place in that process. The extension carrier 504 also carries the following physical channels: DPCCH 516, E-DPCCH 518 and E- DPDCH 520. Multiple HARQ processes 514 are available for data transmission. This example assumes that the UE has data to transmit in all TTIs it is allowed to do so on active HARQ processes. In one embodiment the UE may be allowed to transmit in TTIs on active HARQ processes only.

The HARQ "processes" relate to the E-DPDCH (and E-DPCCH) channel operation. In one example the system is designed to operate multiple Stop-and-Wait HARQ processes in parallel in order to achieve continuous data transmission on E-DPDCH. Each process is used to send data, wait for the receiver to receive and process the transmission, and send an acknowledgement back to the transmitter. Following this, depending on whether it received an ACK or NACK, the transmitter either sends new data or retransmits the old data. If continuous transmission is desired then multiple parallel processes are required: one transmitting while others are waiting. In one example the HSUPA data channel E- DPDCH needs 8 HARQ processes for continuous transmission (HARQ Round Trip Time). In some examples a subset of HARQ processes are activated at any one time, resulting in discontinuous transmission. Another user may then transmit with another set of HARQ processes to achieve time multiplexing of the two users. Referring back to the example of Figure 4, on the primary carrier processes E, F, G and H are active, so data on the E-DPDCH is sent for those HARQ processes on that carrier. In certain examples data may only be sent on the E-DPDCH for those active HARQ processes. Figure 4 also shows that the DPCCH is sent continuously. On the extension carrier 504 processes A and B are active, and no data is sent on the DPCCH 516, E-DPCCH 518 or E-DPDCH 520 during the inactive processes.

By this mechanism the UEs may be approximately time-aligned in their uplink frame timing, with each being allocated a set of active HARQ processes out of an available number (eight in this example), in such a way that they do not overlap. In some examples this allocation process may be provided by the base station to each UE separately. The process may also be "semi-static", that is, a UE is given a set of active processes it is allowed to transmit on until informed otherwise. In one example the chain of eight processes repeats every 16ms, such that a UE with one active process can send a 2ms TTI once every 16ms.

In the example shown in Figure 4 the DPCCH is transmitted continuously on all time slots in the primary carrier regardless of the data transmission activity. In the extension carrier transmission on the DPCCH takes place only during those slots on which the E- DPDCH is transmitted on the extension carrier. This principle may also be applied in relation to other channels e.g. in some examples transmission on a channel may only be enabled when transmission is also taking place on another channel on that carrier. However in some examples E-DPCCH transmission always accompanies the E- DPDCH, providing parameters needed in receiving the E-DPDCH.

It should be appreciated that in some examples the same channels may exist at the same time on both the primary carrier 502 and the extension carrier 504, transmitting data in parallel. For example each or all of the DPCCH, E-DPCCH and E-DPDCH can co-exist on the primary carrier 502 and extension carrier 504.

Figure 5 shows the allocation of transmission time interval (TTI) on the extension carrier 504, according to one example. In this example three UEs 602, 604 and 606 are assigned to transmit on the extension carrier 504. This figure may be true for any of the channels referred to above in respect of Figure 4 i.e. DPCCH, E-DPCCH, E-DPDCH. This example incorporates Time Division Multiplexing (TDM) such that each UE alternates their use of the channel. This is achieved by each UE being assigned active HARQ processes allowed to be used for transmission of data in such a way that the data transmissions do not overlap with each other. In this example the Hybrid Automatic Repeat Request Round Trip Time (HARQ RTT) comprises 8 processes over 16ms i.e. 2ms per process. In other words each transmission time interval (TTI) is 2ms, and consists of three time slots. The time slot and transmission time interval can of course take any other values. For example the transmission time interval could be 1 ms or 10 ms and each time slot 0.5 ms. The active HARQ process 608 is represented by the darkly shaded TTIs and the inactive HARQ process 610 is represented by the lightly shaded TTIs in Figure 5. During time t1 , UE1 602 has two active HARQ processes. Time period t1 comprises two TTIs. During time t2, the subsequent HARQ processes of UE1 602 are inactive, and the HARQ process for UE2 604 are active. Time period t2 comprises two TTIs. During time t3 the HARQ processes of UE2 604 are inactive (UE1 602 processes at this time are also inactive), and the HARQ process for UE3 606 are active. Time period t3 comprises four TTIs. This completes a HARQ RTT for UE1 , UE2 and UE3. This operation repeats every HARQ RTT for each UE, as shown in region 612 of Figure 5. It should be appreciated that the number of UEs and the number and timing of active HARQ processes per UE are exemplary only and may be allocated by the network based on various criteria such as number of UEs with data to transmit, the amount of data each UE has to transmit, available power headroom each UE has to transmit, the UE and data priority and other such criteria related to the data, cell capacity or UEs capabilities of transmitting that data.

In view of this channel organization, in some examples only UL user data of a single

UE is transmitted in any given time on the extension carrier, with the exception that there may be some limited overlap when the change from one UE to another occurs due to propagation delay differences and any inaccuracies in time alignment. This means that the radio scheduler or Node-B schedules/assigns UL user data transmission opportunities of different UEs on to different transmission time intervals. Additionally the UE may omit sending DPCCH control information typically used for channel estimation and power control on TTIs in which the UE does not send UL user data. In some examples the DPCCH transmission may start a short time before the data transmission starts (a preamble), and/or continue a little after the data transmission ends (a postamble). In one example the DPCCH may not exist at all on the extension carrier even when UE sends data on the data channel, and the needed information for channel estimation may then be derived from other channels. As a result of this channel organisation the non-time- overlapping transmissions do not cause interference to each other, increasing the achievable data rates. In examples where the transmission of continuous DPCCH, or transmitting DPCCH at all is considered unnecessary and thus omitted either when no data is sent, or omitted completely, this enables use of the same receiver resources in the base station to be used to receive multiple users by allocating them to different users at different times. Furthermore the omitted DPCCH reduces intra-carrier interference and may eliminate the need to provide continuous power control information in the downlink .

Figure 6 shows the power adjustment of the DPCCH on both the primary carrier 702 and the extension carrier 704. In the primary carrier 702 the primary carrier DPCCH power 706 is adjusted at every slot. The extension carrier DPCCH power 708 (when sent) is set based on a short term average of the primary carrier DPCCH power 706 plus a network- provided offset. The extension carrier DPCCH power 708 stays constant over each Transmission Time Interval (TTI). Since the power used in the extension carrier is based on the power used in the primary carrier, then there is also a time offset between the determination for the extension carrier power level, and when the power is to be applied in the extension carrier. For example the power level used in the extension carrier in TTI2 is derived from the average of the slot-by-slot DPCCH power level for the primary carrier in TTI 1. In an embodiment where the DPCCH is never present on the extension carrier, the transmit power of the data channel(s) on the extension carrier are derived using the procedure here described for the extension carrier DPCCH. The power control may be carried out by a network node. The network node may also determine and control the DPCCH power offset by new power offset commands sent to the UE. This network node may in one embodiment be a Node-B.

It should also be appreciated that the determination of the power level to be used in the extension carrier can be achieved in a number of ways. For example the time interval over which the average power value in the primary carrier is determined may vary. For example, rather than taking an average value over one TTI, the average could be taken over any number of TTIs. The average value may also be determined in a number of ways. In one embodiment the average value may be a mean value of the power levels on the primary carrier. In another embodiment the average value may be a median value of the power levels on the primary carrier.

The way in which the offset value is applied to the extension carrier power level may also be varied. For example, the offset value may be subtracted from the average power level rather than being added to it. In another embodiment there may be no offset value i.e. the offset value is set to zero. The ways in which the offset value is calculated are various. For example the offset value may be a fixed value. Alternatively the offset value may be a function of another value. For example the offset value could be a function of the average power level on the primary carrier.

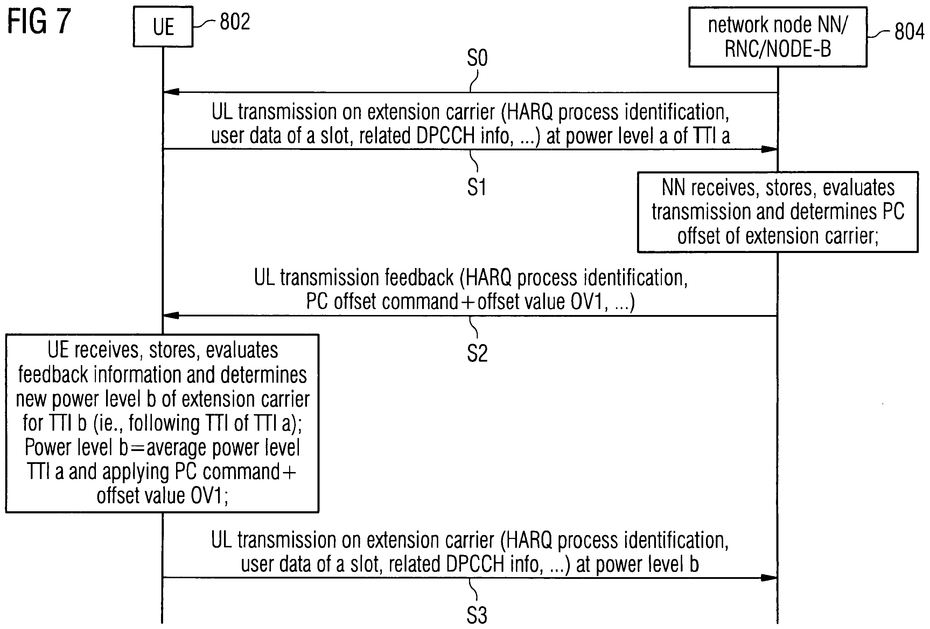

Figure 7 shows a messaging flow between a UE 802, and a network node 804. In one embodiment the network node 804 may be a Node-B. In another embodiment the network node 804 may be a Radio Network Controller (RNC).

At step SO the network node signals an initial offset value to the UE. In one embodiment this is a fixed value. In another embodiment this value is determined by and provided by the RNC or Node-B. This value may be adjusted later on by the network node 804. In one embodiment the offset is the initial power offset between the averaged primary carrier DPCCH power and the transmit power of the extension carrier DPCCH (or if no DPCCH is used, the data channel). In other words:

$$P(dpcch\_ext) = averaged\ P(dpcch\_primary) + intial\ power\ offset$$

Therefore in some embodiments there is an initial offset value (most likely provided by the RNC to the UE), and subsequently the Node B may change this offset.

At step S1 the UE 802 transmits data and control information to the node 804, in this embodiment a Node-B, on one or multiple physical channels. In one embodiment this transmission takes place on an extension carrier in a first transmission time interval (TTI) at a first power level P1, where P1 may be relative to the power level of a transmission on the primary carrier. The node 804 then receives, stores and evaluates this information. Using this information the node determines the power control offset for the extension carrier.

At step S2 the node 804, in this embodiment a Node-B, sends feedback information to the UE 802. The feedback information may be constructed of multiple separate messages, such as a message controlling HARQ process activation status and may comprise information of whether a particular HARQ process or processes should be activated or deactivated, and may also comprise a power control offset message comprising of an offset value OV1. The UE then receives, stores, and evaluates this information and determines a new power level for the extension carrier in a second transmission time interval. As discussed above the new power level is determined as an average of the power level for the primary carrier in the previous TTI plus the received offset value in the power control command. In some embodiments if the UE has not received a message comprising of a power offset, it will use the initial power offset. If a UE has received a message comprising of a power offset value OV1, it will use that power offset value until it receives a new message comprising a new power offset value OV2.

At step S3 the UE transmits on the extension carrier using the new power offset. In some embodiments the power level on the extension carrier may change from TTI to TTI as the average power used to transmit the DPCCH on the primary carrier changes. However, in some embodiments the relation between the averaged primary carrier DPCCH power and the transmissions on the extension carrier is dictated by the latest power offset value received. In some embodiments this does not change unless a new power offset message is received.

In the embodiment of Figure 7 the data is transmitted between the UE 802 and the network node 804 on the E-DPDCH. The E-DPCCH may provide the information that is needed for decoding the data, and the DPCCH may provide the pilot information needed for channel estimation so that any further data can be received. In one embodiment the HARQ process number of a transmission may be derived from the time of the transmission.

Some features which may be associated with this type of extension carrier include an improvement in the uplink capacity since the link is only used when it is needed. Also, since only one UE transmits at a given time on the extension carrier, then there is no intra-cell interference on the extension carrier, again resulting in an improvement to the uplink capacity. The DL overhead for power control is also reduced since it does not require two independent power control loops. Furthermore, the extension carrier can be time shared with traditional WCDMA users. This may allow the use of a legacy WCDMA base station to receive the signal, whilst sharing the receiver resources in a TDMA fashion.

This may be compared with the use of different power control loops on the two uplinks (e.g. primary and secondary carriers), which may require a constant reference signal (uplink DPCCH) on the carrier in question, thus potentially leading to a bigger imbalance between carriers, due to e.g. interference variations and power control command decoding errors etc.

Since in some embodiments the other carrier is intended to be used only by one user at a time, the power control does not need to be as fast as with multiple users in a normal CDMA operation as there is no simultaneous transmission that may be interfered or even blocked by an inaccurately power controlled transmitter. This also allows operating such an extension carrier with potentially very high receive power levels facilitating potentially very high data rates, which may not be possible when multiple CDMA transmitters share the same carrier at the same time. Furthermore, with only one user active at a time as per some embodiments, the interference level on the secondary carrier may behave differently compared with the case of multiple users and thus may not need to be tracked with the closed loop power control as the interference within the cell is potentially mostly absent with the possible exception of some possible overlap due to timing differences in the uplink transmission. This may be due to the propagation difference and potential temporary overlapping DPCCH transmissions.

The longer term average of the primary carrier power may be an indication of the overall path loss ,which may be comparable to the extension carrier's path loss, and the primary carrier's interference situation. Thus, in some embodiments, the derivation of needed transmission power from the power used on the primary carrier, with a suitable offset taking into account the difference in interference situation on the two carriers as well as the different receive power level (RoT) targets on the two carriers, which could possibly have a negative value, to cover for the absence of the intra-cell interference, may be suitable to estimate the momentary path loss in the uplink. Any small estimation errors potentially may not cause negative impacts to the transmission of other users, and the resulting total transmission power used may be expected to be less due to the lack of the needed uplink DPCCH transmission for continuous power control loop maintenance.

An appropriately adapted computer program code product or products may be used for implementing the embodiments, when loaded on an appropriate data processing apparatus, for example for determining geographical boundary based operations and/or other control operations. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

It is also noted herein that while the above describes exemplifying embodiments of the invention, there are several variations and modifications which may be made to the disclosed solution without departing from the scope of the present invention as defined in the appended claims.

## Claims

1.   A method, **characterised in that** the method comprises:

sending information relating to at least one parameter with which an apparatus (802) is configured to transmit a signal on an extension carrier (504) in a communication system (100), wherein said at least one parameter with which the apparatus is configured to transmit the signal comprises a transmission power level for the apparatus on the extension carrier;
said information being based upon at least one parameter of a primary carrier (502) in the communication system (100), wherein said at least one parameter of the primary carrier comprises a transmission power level in the primary carrier; and
wherein said information comprises a power offset value which is determined such that said transmission power level for the apparatus on the extension carrier is determined from an average power level on the primary carrier over a plurality of time slots and the power offset value.

2.   A method as set forth in any preceding claim, comprising enabling one apparatus at a time to transmit on a data channel on the extension carrier (504).

3.   A method, **characterised in that** the method comprises:

receiving information relating to at least one parameter with which an apparatus (802) is configured to transmit a signal on an extension carrier (504) in a communication system (100), wherein said received information relating to at least one parameter with which the apparatus is configured to transmit a signal comprises a transmission power level for the apparatus on the extension carrier;
said information being based upon at least one parameter of a primary carrier (502) in the communication system (100), wherein said at least one parameter of the primary carrier comprises a transmission power level in the primary carrier, and wherein said information comprises a power offset value; and
determining said transmission power level for the apparatus on the extension carrier from an average power level on the primary carrier over a plurality of time slots and the power offset value.

4.   A method as set forth in claim 3, comprising enabling one apparatus at a time to transmit on a data channel on the extension carrier (504).

5.   A computer program comprising computer executable instructions which when run on one or more processors, cause the one or more processors to carry out the method of any of claims 1 to 4.

6.   An apparatus (804) comprising:

at least one processor;
and at least one memory including computer program code;
**characterised by** the at least one memory and the computer program code being configured to, with the at least one processor, cause the apparatus (804) at least to send information relating to at least one parameter with which a second apparatus (802) is configured to transmit a signal on an extension carrier (504) in a communication system (100), wherein said at least one parameter with which the second apparatus is configured to transmit the signal on the extension carrier comprises a transmission power level for the second apparatus on the extension carrier;
said information being based upon at least one parameter of a primary carrier (502) in the communication system (100), wherein said at least one parameter of the primary carrier comprises a transmission power level in the primary carrier; and

wherein said information comprises a power offset value which is determined such that said transmission power level for the second apparatus on the extension carrier is determined from an average power level on the primary carrier over a plurality of time slots and the power offset value.

7. An apparatus (802) comprising:

at least one processor;

and at least one memory including computer program code;

**characterised by** the at least one memory and the computer program code being configured to, with the at least one processor, cause the apparatus (802) at least to receive information relating to at least one parameter with which the apparatus (802) is configured to transmit a signal on an extension carrier (504) in a communication system (100), wherein said at least one parameter with which the apparatus is configured to transmit the signal on the extension carrier comprises a transmission power level for the apparatus on the extension carrier;

said information being based upon at least one parameter of a primary carrier (502) in the communication system (100), wherein said at least one parameter of the primary carrier comprises a transmission power level in the primary carrier, and wherein said information comprises a power offset value; and

determine said transmission power level for the apparatus on the extension carrier from an average power level on the primary carrier over a plurality of time slots and the power offset value.

**Patentansprüche**

1. Verfahren, **dadurch gekennzeichnet, dass** das Verfahren Folgendes umfasst:

Senden von Informationen bezüglich mindestens eines Parameters, mit dem eine Vorrichtung (802) konfiguriert ist, ein Signal auf einem Erweiterungsträger (504) in einem Kommunikationssystem (100) zu senden, wobei der mindestens eine Parameter, mit dem die Vorrichtung konfiguriert ist, das Signal zu senden, einen Übertragungsleistungspegel für die Vorrichtung auf dem Erweiterungsträger umfasst;

wobei die Informationen auf mindestens einem Parameter eines primären Trägers (502) in dem Kommunikationssystem (100) beruhen, wobei der mindestens eine Parameter des primären Trägers einen Übertragungsleistungspegel in dem primären Träger umfasst; und

wobei die Informationen einen Leistungsversatzwert umfassen, der derart bestimmt wird, dass der Übertragungsleistungspegel für die Vorrichtung aus dem Erweiterungsträger aus einem Durchschnittsleistungspegel auf dem primären Träger über mehrere Zeitfenster und dem Leistungsversatzwert bestimmt wird.

2. Verfahren nach einem vorhergehenden Anspruch, das umfasst, eine Vorrichtung zu einem Zeitpunkt zu aktivieren, auf einem Datenkanal des Erweiterungsträgers (504) zu senden.

3. Verfahren, **dadurch gekennzeichnet, dass** das Verfahren Folgendes umfasst:

Empfangen von Informationen bezüglich mindestens eines Parameters, mit dem eine Vorrichtung (802) konfiguriert ist, ein Signal auf einem Erweiterungsträger (504) in einem Kommunikationssystem (100) zu senden, wobei die empfangenen Informationen, die sich auf mindestens einen Parameter beziehen, mit dem die Vorrichtung konfiguriert ist, ein Signal zu senden, einen Übertragungsleistungspegel für die Vorrichtung auf dem Erweiterungsträger umfassen;

wobei die Informationen auf mindestens einem Parameter eines primären Trägers (502) in dem Kommunikationssystem (100) beruhen, wobei der mindestens eine Parameter des primären Trägers einen Übertragungsleistungspegel in dem primären Träger umfasst und wobei die Informationen einen Leistungsversatzwert umfassen; und

Bestimmen des Übertragungsleistungspegels für die Vorrichtung auf dem Erweiterungsträger aus einem Durchschnittsleistungspegel auf dem primären Träger über mehrere Zeitfenster und dem Leistungsversatzwert.

4. Verfahren nach Anspruch 3, das umfasst, zu einer Zeit eine Vorrichtung zu aktivieren, auf einem Datenkanal des Erweiterungsträgers (504) zu senden.

5. Computerprogramm, das computerausführbare Anweisungen umfasst, die dann, wenn sie auf einem oder mehreren Prozessoren laufen, bewirken, dass der eine oder die mehreren Prozessoren das Verfahren nach einem der Ansprüche 1 bis 4 ausführen.

6. Vorrichtung (804), die Folgendes umfasst:

mindestens einen Prozessor;
und mindestens einen Speicher, der Computerprogrammcode enthält;
**dadurch gekennzeichnet, dass** der mindestens eine Speicher und der Computerprogrammcode konfiguriert sind, mit dem mindestens einen Prozessor zu bewirken, dass die Vorrichtung (804) mindestens Informationen bezüglich mindestens eines Parameters sendet, mit dem eine zweite Vorrichtung (802) konfiguriert ist, ein Signal auf einem Erweiterungsträger (504) in einem Kommunikationssystem (100) zu senden, wobei der mindestens eine Parameter, mit dem die zweite Vorrichtung konfiguriert ist, das Signal auf dem Erweiterungsträger zu senden, einen Übertragungsleistungspegel für die zweite Vorrichtung auf dem Erweiterungsträger umfasst; wobei die Informationen auf mindestens einem Parameter eines primären Trägers (502) in dem Kommunikationssystem (100) beruhen, wobei der mindestens eine Parameter des primären Trägers einen Übertragungsleistungspegel in dem primären Träger umfasst; und
wobei die Informationen einen Leistungsversatzwert umfassen, der derart bestimmt wird, dass der Übertragungsleistungspegel für die zweite Vorrichtung auf dem Erweiterungsträger aus einem Durchschnittsleistungspegel auf dem primären Träger über mehrere Zeitfenster und dem Leistungsversatzwert bestimmt wird.

7. Vorrichtung (802), die Folgendes umfasst:

mindestens einen Prozessor;
und mindestens einen Speicher, der Computerprogrammcode enthält;
**dadurch gekennzeichnet, dass** der mindestens eine Speicher und der Computerprogrammcode konfiguriert sind, mit dem mindestens einen Prozessor zu bewirken, dass die Vorrichtung (804) mindestens Informationen bezüglich mindestens eines Parameters empfängt, mit dem die Vorrichtung (802) konfiguriert ist, ein Signal auf einem Erweiterungsträger (504) in einem Kommunikationssystem (100) zu senden, wobei der mindestens eine Parameter, mit dem die zweite Vorrichtung konfiguriert ist, das Signal auf dem Erweiterungsträger zu senden, einen Übertragungsleistungspegel für die Vorrichtung auf dem Erweiterungsträger umfasst;
wobei die Informationen auf mindestens einem Parameter eines primären Trägers (502) in dem Kommunikationssystem (100) beruhen, wobei der mindestens eine Parameter des primären Trägers einen Übertragungsleistungspegel in dem primären Träger umfasst, und wobei die Informationen einen Leistungsverssatzwert umfassen; und
den Übertragungsleistungspegel für die Vorrichtung auf dem Erweiterungsträger aus einem Durchschnittsleistungspegel auf dem primären Träger über mehrere Zeitfenster und dem Leistungsversatzwert bestimmt.

**Revendications**

1. Procédé, le procédé étant **caractérisé en ce qu'**il comprend :

l'envoi d'informations relatives à au moins un paramètre au moyen duquel un appareil (802) est configuré pour émettre un signal sur une porteuse d'extension (504) dans un système de communication (100), ledit au moins un paramètre au moyen duquel l'appareil est configuré pour émettre le signal comprenant un niveau de puissance d'émission pour l'appareil sur la porteuse d'extension ;
lesdites informations étant basées sur au moins un paramètre d'une porteuse primaire (502) dans le système de communication (100), ledit au moins un paramètre de la porteuse primaire comprenant un niveau de puissance d'émission dans la porteuse primaire ; et
lesdites informations comprenant une valeur de décalage de puissance qui est déterminée de sorte que ledit niveau de puissance d'émission pour l'appareil sur la porteuse d'extension soit déterminé à partir d'un niveau de puissance moyen sur la porteuse primaire sur une pluralité de créneaux temporels et de la valeur de décalage de puissance.

2. Procédé selon l'une quelconque des revendications précédentes, comprenant l'habilitation d'un appareil à la fois à émettre sur un canal de données sur la porteuse d'extension (504).

3. Procédé, le procédé étant **caractérisé en ce qu'**il comprend :

la réception d'informations relatives à au moins un paramètre au moyen duquel un appareil (802) est configuré pour émettre un signal sur une porteuse d'extension (504) dans un système de communication (100), lesdites informations reçues relatives à au moins un paramètre au moyen duquel l'appareil est configuré pour émettre un signal comprenant un niveau de puissance d'émission pour l'appareil sur la porteuse d'extension ;

lesdites informations étant basées sur au moins un paramètre d'une porteuse primaire (502) dans le système de communication (100), ledit au moins un paramètre de la porteuse primaire comprenant un niveau de puissance d'émission dans la porteuse primaire, et lesdites informations comprenant une valeur de décalage de puissance ; et

la détermination dudit niveau de puissance d'émission pour l'appareil sur la porteuse d'extension à partir d'un niveau de puissance moyen sur la porteuse primaire sur une pluralité de créneaux temporels et de la valeur de décalage de puissance.

4. Procédé selon la revendication 3, comprenant l'habilitation d'un appareil à la fois à émettre sur un canal de données sur la porteuse d'extension (504).

5. Programme d'ordinateur comprenant des instructions exécutables par ordinateur qui, lorsqu'elles sont exécutées sur un ou plusieurs processeurs, amènent les un ou plusieurs processeurs à réaliser le procédé selon l'une quelconque des revendications 1 à 4.

6. Appareil (804), comprenant :

au moins un processeur ;
et au moins une mémoire comportant un code de programme d'ordinateur ;
**caractérisé en ce que** l'au moins une mémoire et le code de programme d'ordinateur sont configurés pour, conjointement avec l'au moins un processeur, amener l'appareil (804) au moins à envoyer des informations relatives à au moins un paramètre au moyen duquel un deuxième appareil (802) est configuré pour émettre un signal sur une porteuse d'extension (504) dans un système de communication (100), ledit au moins un paramètre au moyen duquel le deuxième appareil est configuré pour émettre le signal sur la porteuse d'extension comprenant un niveau de puissance d'émission pour le deuxième appareil sur la porteuse d'extension ;

lesdites informations étant basées sur au moins un paramètre d'une porteuse primaire (502) dans le système de communication (100), ledit au moins un paramètre de la porteuse primaire comprenant un niveau de puissance d'émission dans la porteuse primaire ; et

lesdites informations comprenant une valeur de décalage de puissance qui est déterminée de sorte que ledit niveau de puissance d'émission pour le deuxième appareil sur la porteuse d'extension soit déterminé à partir d'un niveau de puissance moyen sur la porteuse primaire sur une pluralité de créneaux temporels et de la valeur de décalage de puissance.

7. Appareil (802), comprenant :

au moins un processeur ;
et au moins une mémoire comportant un code de programme d'ordinateur ;
**caractérisé en ce que** l'au moins une mémoire et le code de programme d'ordinateur sont configurés pour, conjointement avec l'au moins un processeur, amener l'appareil (804) au moins à recevoir des informations relatives à au moins un paramètre au moyen duquel l'appareil (802) est configuré pour émettre un signal sur une porteuse d'extension (504) dans un système de communication (100), ledit au moins un paramètre au moyen duquel l'appareil est configuré pour émettre le signal sur la porteuse d'extension comprenant un niveau de puissance d'émission pour l'appareil sur la porteuse d'extension ;

lesdites informations étant basées sur au moins un paramètre d'une porteuse primaire (502) dans le système de communication (100), ledit au moins un paramètre de la porteuse primaire comprenant un niveau de puissance d'émission dans la porteuse primaire, et lesdites informations comprenant une valeur de décalage de puissance ; et

déterminer ledit niveau de puissance d'émission pour l'appareil sur la porteuse d'extension à partir d'un niveau de puissance moyen sur la porteuse primaire sur une pluralité de créneaux temporels et de la valeur de décalage de puissance.

FIG 1

EP 2 850 768 B1

FIG 2

FIG 3A

## FIG 3B

105

401    403

402

405

404

## FIG 4

| | | A | B | C | D | E | F | G | H | |
|---|---|---|---|---|---|---|---|---|---|---|
| 502 | Processes | | | | | | | | | 506 |
| Primary carrier | DPCCH | | | | | | | | | 508 |
| | E-DPCCH | | | | | | | | | 510 |
| | E-DPDCH | | | | | | | | | 512 |
| 504 | Processes | | | | | | | | | 514 |
| Extension carrier | DPCCH | | | | | | | | | 516 |
| | E-DPCCH | | | | | | | | | 518 |
| | E-DPDCH | | | | | | | | | 520 |

## FIG 5

608

Active HARQ
process

610

Inactive HARQ
process

602 — UE1

604 — UE2

606 — UE3

HARQ RTT (8 processes, 16 ms)

612

t1    t2    t3

## FIG 6

702

Average

706

Primary carrier DPCCH

+offset

POWER

Extension carrier DPCCH

708

TTI1 | TTI2 | TTI3 | TTI4

EP 2 850 768 B1

**FIG 7**

UE — 802

network node NN/ RNC/NODE-B — 804

S0

UL transmission on extension carrier (HARQ process identification, user data of a slot, related DPCCH info, ...) at power level a of TTI a

S1

NN receives, stores, evaluates transmission and determines PC offset of extension carrier;

UL transmission feedback (HARQ process identification, PC offset command + offset value OV1, ...)

S2

UE receives, stores, evaluates feedback information and determines new power level b of extension carrier for TTI b (ie., following TTI of TTI a); Power level b = average power level TTI a and applying PC command + offset value OV1;

UL transmission on extension carrier (HARQ process identification, user data of a slot, related DPCCH info, ...) at power level b

S3

EP 2 850 768 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012024338 A1